Europäisches Patentamt

European Patent Office

Office européen des brevets

(19)

(11) Publication number: **0 260 987 B1**

## EUROPEAN PATENT SPECIFICATION

(12)

(45) Date of publication of patent specification: **23.12.92** (51) Int. Cl.⁵: **G11B 7/09**

(21) Application number: **87308289.5**

(22) Date of filing: **18.09.87**

(54) Offset compensating circuit, in fine control servo device.

(30) Priority: **19.09.86 JP 221679/86**

(43) Date of publication of application:
**23.03.88 Bulletin 88/12**

(45) Publication of the grant of the patent:
**23.12.92 Bulletin 92/52**

(84) Designated Contracting States:
**DE FR GB**

(56) References cited:
**EP-A- 0 099 576**
**EP-A- 0 155 077**
**EP-A- 0 189 932**
**EP-A- 0 190 438**
**EP-A- 0 221 782**

**PATENT ABSTRACTS OF JAPAN vol. 9, no. 236 (P-390) 1959 21 September 1985, & JP-A-60 089837 (TOSHIBA K.K.)**

**PATENT ABSTRACTS OF JAPAN vol. 10, no. 26 (P-425) 2083 31 January 1986, & JP-A-60 177436 (MITSUBISHI DENKI K.K.)**

**PATENT ABSTRACTS OF JAPAN vol. 9, no. 320 (P-413) 2043 14 December 1985, & JP-A-60 145540 (NIPPON VICTOR K.K.)**

(73) Proprietor: **PIONEER ELECTRONIC CORPORA-TION**
**No. 4-1, Meguro 1-chome**
**Meguro-ku Tokyo 153(JP)**

(72) Inventor: **Tateishi, Kiyoshi Pioneer Electronic Corporation**
**Tokorozawa Works No. 2610, Hanazono 4-chome**
**Tokorozawa-shi Saitama(JP)**

(74) Representative: **Brunner, Michael John et al**
**GILL JENNINGS & EVERY 53-64 Chancery Lane**
**London WC2A 1HN(GB)**

Rank Xerox (UK) Business Services

## Description

This invention relates to an offset compensating circuit in a fine control servo device such as a tracking servo device or a focus servo device in an optical disk player for example.

An optical player or the like is adapted to reproduce data recorded on a data recording disk (hereinafter referred to merely as "a disk") such as a video disk or a digital audio disk. Such an apparatus may have a tracking servo device for allowing a data detecting point to accurately follow the recording track of the disk and a focus servo device for focusing a laser beam, as a data detecting point, on to the recording surface of the disk with high accuracy. Servo devices for such use are classified into coarse control servo devices, such as a slider servo, which cause large displacement of the movable object to be controlled, and fine control devices which may comprise an objective lens or a pickup including an objective lens, so that the deflection of a movable object from a target can be finely controlled.

In fine control servo devices, sometimes the error signal involves a DC offset because of fluctuations of the power of a light source such as a laser diode, of the reflection factor of a disk, or variations in the characteristics of an error signal detecting system or an error signal amplifying system. This offset will result in a steady-state error, and the servo operation with thus be unstable.

In view of the foregoing, it is known (see JP-A-60-89837) to provide an offset compensating circuit for a fine control device, in which an offset in the servo system is compensated for to permit a stable servo operation. This achieved by a servo loop including an error signal source and means for processing the error signal; means for opening the servo loop; peak detecting means for detecting positive and negative peak values and of the error signal with the servo loop held open; means for calculating an offset value by summing the two peak values and dividing the result by 2; and means for subtracting the offset value from a signal level of the error signal.

From EP-A-0155077 it is known to average a plurality of positive and negative peak values in order to improve precision in an offset correction procedure.

In order to increase the precision and reduce the effects of noise, according to the present invention, there is provided an offset compensating circuit for a tracking servo device or a focus servo device in an optical disk player, comprising:

means for opening the servo loop, the error signal (x) existing during the opened state being of periodic or S-shaped curve characteristic;

peak detecting means for detecting at least one positive and negative peak value $P_P$, $P_N$ of the error signal with the servo loop held open;

means for calculating an offset value $x_{OF}$ by inserting the peak values $P_P$ and $P_N$ in the following expression:

$$x_{OF} = (P_P + P_N)/2$$

and holding the offset value; and

means for subtracting the offset value from a signal level of the error signal (x) in the closed state (a) of the servo loop, characterised in that

the peak detecting means samples at a predetermined frequency a plurality of values (x) of the error signal with the servo loop held open; and by

means for determining for each sample whether or not a predetermined period substantially longer than the sampling period has lapsed after the servo loop is opened and, if it has not lapsed, setting peak value compensating constant (LE) to a first value greater than a second value to which it is set if the predetermined value has lapsed;

means for determining for each sample whether the error signal (x) is positive or negative;

means for determining, if the error signal (x) is positive, whether or not the error signal (x) is larger than the previously detected peak positive value, and, if it is larger, setting the peak positive value $(x_{PP})$ to be equal to the error signal (x), and, if it is smaller, setting the peak positive value $(x_{PP})$ to the previously detected peak positive value less the compensation constant $(x_{PP}-LE)$;

means for determining, if the error signal (x) is negative, whether or not the error signal (x) is smaller than the previously detected peak negative value, and, if it is smaller, setting the peak negative value $(x_{PN})$ to be equal to the error signal (x), and, if it is larger, setting the peak negative value $(x_{PN})$ to the previously detected peak negative value plus the compensation constant $(x_{PN} + LE)$;

and by means for averaging the pluralities of positive and negative peak values thus generated to provide averaged positive and negative peak values $P_P$ and $P_N$.

Two embodiments of circuits according to the invention will now be described with reference to the accompanying drawings, in which:-

Fig. 1 is a block diagram showing one circuit applied to a tracking servo device;

Fig. 2 is waveform diagram showing the waveform of a tracking error signal with a servo loop kept open;

Fig. 3 is a block diagram showing another circuit; and,

Fig. 4 is a flow chart showing a procedure for calculating an offset value by a microprocessor.

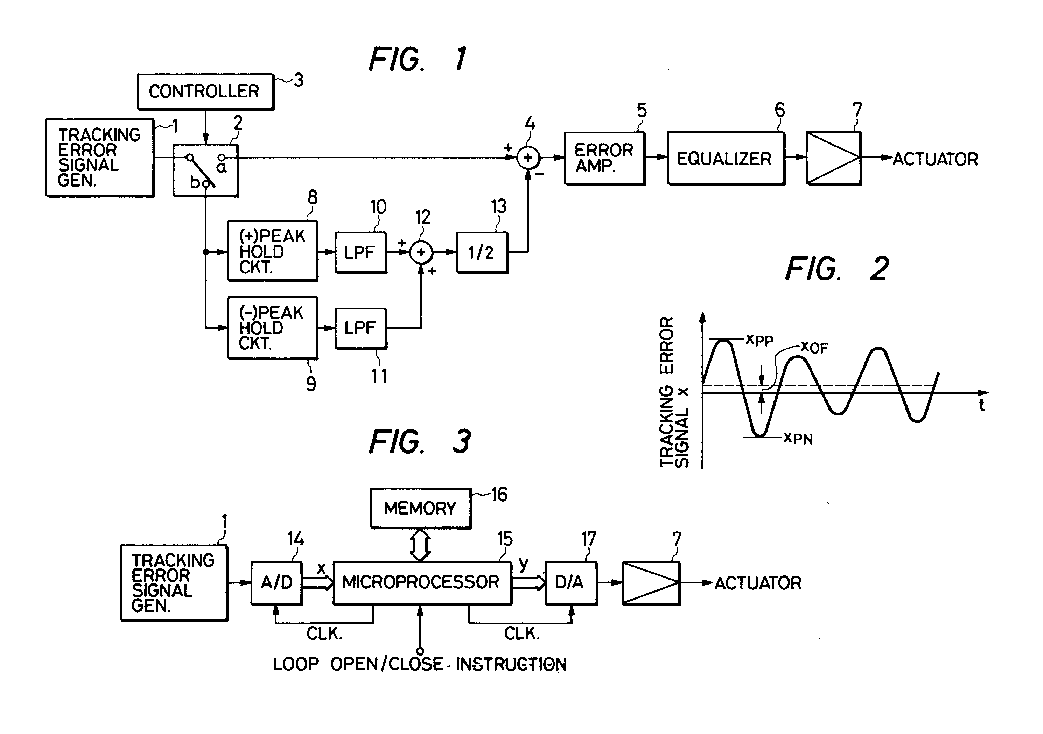

In Fig. 1, a tracking error signal forming circuit 1 outputs a tracking error signal according to a light beam which is emitted from a pickup (not shown) and for instance reflected from the recording surface of a disk. The tracking error signal is formed according to a so-called "three-beam method" in which three beams, namely, a data detecting main beam and sub-beams arranged on both sides of the main beam are provided in such a manner that a line connecting the centres of these beams forms an offset angle with the track direction. An error signal $x$ is obtained according to the difference in the quantity of light between the sub-beams reflected from the recording surface of the disk. Since the method of forming an error signal in the three-beam method is well known in the art, it will not be further described.

The tracking error signal formed by the tracking error signal forming circuit 1 is supplied to a loop switch 2 and the tripping of the loop switch 2 is controlled by a controller 3. When the switch 2 is at a contact a, a closed loop state is obtained and when it is at a contact b, an open loop state is obtained. When the servo loop is closed, the tracking error signal is supplied as a positive (+) input to a subtractor 4. The subtraction output of the subtractor 4 is supplied through an error amplifier 5, an equalizer circuit 6 and a drive amplifier 7 to a tracking actuator (not shown). The tracking actuator is built into the pickup to deflect the data detecting light spot (data detecting point) of the pickup in a direction perpendicular to a recording track (i.e., in the radial direction of the disk).

Thus, a tracking servo loop is completed. Therefore, driving the tracking actuator according to the signal level of the tracking error signal formed by the tracking error signal forming circuit 1 can cause the data detecting light spot to accurately follow the recording track of the disk at all times.

During a set-up mode or searching of a disk, the controller 3 operates to trip the armature of the loop switch 2 over to the contact b so that the servo loop is kept open for a predetermined period of time. When the servo loop is open, the tracking error signal changes as shown in Fig. 2. The tracking error signal is supplied to a positive peak hold circuit 8, where its positive peak value $x_{PP}$ is held, and is further supplied to a negative peak hold circuit 9, where its negative peak value $x_{PN}$ is held. The peak hold outputs $P_P$ and $P_N$ of the peak hold circuits 8 and 9 are supplied respectively through LPFs (low-pass filters) 10 and 11 to an adder 12, where they are added to each other. The output $(P_P + P_N)$ of the adder 12 is applied to a multiplier 13, where it is multiplied by a factor of 1/2. The result of this multiplication, i.e., $(P_P + P_N)/2$ is an offset value $x_{OF}$ equal to the average of the positive and negative peaks $x_{PP}$ and $x_{PN}$. The offset value

$x_{OF}$ is applied, as a negative (-) input, to the subtractor 4. In the loop closed state, the offset value is subtracted from the signal level of the tracking error signal applied as a positive (+) input to the subtractor 4, thus performing the offset compensation.

Thus, the tracking error signal, the DC offset of which has been cancelled out, is provided at the output terminal of the subtractor 4. Therefore, the tracking operation is maintained stable independently of fluctuations of the power of the light source such as a laser diode, of the reflection factor of the disk, or variations in characterisitic of the error signal detecting system, or of the error signal amplifying system.

When the servo loop is open, the tracking error signal is frequency-modulated because of the eccentricity of the disk. If, in this case, the speed of a spindle motor rotating the disk is smaller than a certain value, then it takes a relatively long period of time to hold the peak values of the error signals because the modulating frequency is low. In the case where a noise eliminating LPF is provided on the tracking signal input side, the tracking signal is frequency-modulated because of the eccentricity of the disk and it is varied in amplitude by the LPF. Therefore, in each of the positive and negative peak hold circuits 8 and 9, the peak values are held over several eccentric revolutions of the disk, and averaged, so that the peak holding operation can be achieved with high accuracy. In other words, if the speed of the spindle motor is higher than a certain value, then when the peak hold time is set to a predetermined value, the number of peak values due to the eccentricity of the disk becomes higher than a certain value, so that the peak holding operation can be carried out with high accuracy.

In the above-described embodiment, the tracking error signal offset compensation is performed in individual electronic hardware components. The same effect, however, can be obtained using software including a microprocessor as shown in Fig. 3.

In Fig. 3, circuit elements corresponding functionally to those which have been described with reference to Fig. 1 are designated by the same reference numerals or characters. The tracking error signal outputted by the circuit 1 is supplied to an A/D (analog-to-digital) converter 14, where it is converted into a digital signal. The digital signal is applied to a microprocessor 15 which operates as follows. The microprocessor 15 places the loop in an open state in response to a loop open instruction, and under this condition, holds the positive and negative peak values $P_P$ and $P_N$ of the tracking error signal in a memory 16. Furthermore, the microprocessor 15 calculates an offset value $x_{OF}$ by inserting these values $P_P$ and $P_N$ thusheld into the expression $(P_P + P_N)/2$ and stores the offset value $x_{OF}$ in the memory 16. In response to a loop close instruction, the microprocessor operates to subtract the offset value $x_{OF}$ from the signal level of the tracking error signal x to perform an offset compensating operation, and to subject the tracking error signal thus compensated to equalizing as required. A tracking error signal y provided by the microprocessor 15 is applied to a D/A (digital-to-analog) converter 17, where it is converted into an analog signal. The analog signal is supplied through the drive amplifier 7 to the actuator.

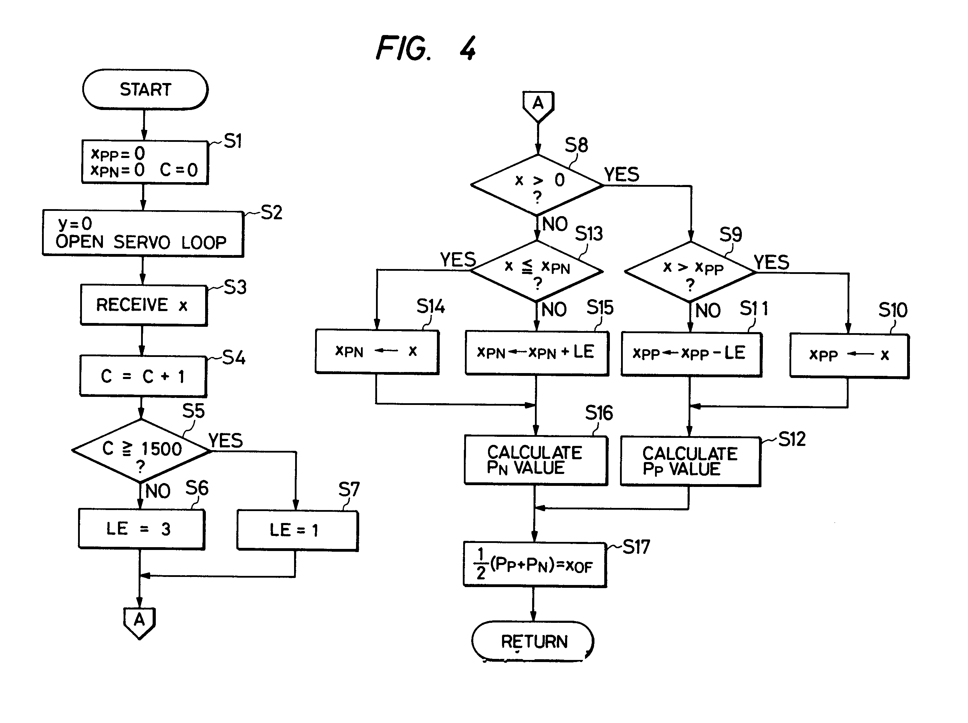

One procedure for calculating the offset value $x_{OF}$ in the microprocessor 15 will be described with reference to the flow chart of Fig. 4. In this connection, it is assumed that the calculation is carried out during a predetermined period of time, for instance 150 msec, after the speed of rotation of the spindle motor has reached a predetermined value with the focus servo locked, and with the sampling frequency set to 30 kHz.

First, an initial setting operation in step S1 resets detected peak values $x_{PP}$ and $x_{PN}$, and a count value C of a counter which increments its count value in synchronization with the sampling period. Then, the value y of the tracking error signal outputted by the microprocessor 15 is set to zero (0) and the servo loop is opened in step S2. Thereafter, the tracking error signal x is received in step S3. Under this condition, the count value C is incremented by one (1) in step S4, and it is determined whether or not the resultant count value C is larger than, for instance 1500 in step S5. If C < 1500, then for instance "3" is set into a constant LE in step S6; and, if C ≥ 1500, then for instance "1" is set into the constant LE in step S7.

The constant LE is used to compensate for noise in the peak holding operation and acts as follows. Of the sample and hold period (150ms), for instance, for the first 50ms, the detected peak values $x_{PP}$ and $x_{PN}$ are allowed satisfactorily to follow the variation in the peak of the error signal with LE = 3. Thereafter, with LE set to 1, the leakage of the peak is minimized. The reference count value 1500 is determined by the 50 msec initial period and the sampling frequency of 30 kHz. That is, the constant LE is employed for an improvement of the holding characteristic.

In step S8, it is determined whether or not the tracking error signal x is positive. When x > 0, it is determined in step S9 whether or not the error signal x is larger than a previously detected peak value $x_{PP}$. When x > $x_{PP}$, the current value of the error signal x received is set as a detected peak value $x_{PP}$ in step S10. When x ≤ $x_{PP}$, a value obtained by subtracting the constant LE from a previously detected peak value $x_{PP}$ is set as a detected peak value $x_{PP}$ in step S11. A filtered positive peak value $P_P$ equivalent to that passed through the LPF 10 in Fig. 1 is calculated in step S12 from the thus set detected peak values $x_{PP}$.

When x ≤ 0, it is determined in step 13, whether or not the error signal x is smaller than a previously detected peak value $x_{PN}$. When x ≤ $x_{PN}$, the current value of the error signal x received is set in step S14 as a detected peak value $x_{PN}$. When x > $x_{PN}$, a value obtained by adding the constant LE to a previously detected peak value $x_{PN}$ is set in step S15 as a detected peak value $x_{PN}$. Under this condition, a filtered negative peak value $P_N$ (passed through the LPF 11 in Fig. 1) is calculated in step S16 from the thus set detected peak values $x_{PN}$. An offset value $x_{OF}$ is obtained in step S17 by inserting the positive and negative peak values $P_P$ and $P_N$ thus calculated in the expression $x_{OF} = (P_P + P_N)/2$.

While the preferred embodiment of the invention has been described with reference to the tracking servo device, it should be noted that the technical concept of the invention is applicable to a focus servo device. In the latter case, a ramp signal may be applied to a focus actuator with the servo loop kept open, to gradually move an objective lens in a direction perpendicular to the recording surface of a disk, thereby to obtain a focus error signal having a so-called "S-shaped curve characteristic". The positive and negative peak values of the focus error signal thus obtained are held, so that an offset value is calculated according to the above described expression.

As described above, in the invention, with the servo loop kept open the positive and negative peak values of the error signal are detected, and the offset of the tracking error signal is cancelled by subtracting the offset value calculated using these peak values from the signal level of the error signal. Therefore, the servo operation is made stable independently of fluctuations of the power of the light souce such as a laser diode, of the reflection factor of the disk, or variations in the characterisitics of the error signal detecting system, or the error signal amplifying system.

## Claims

1. An offset compensating circuit for a tracking servo device or a focus servo device in an optical disk player, comprising:

means (2) for opening the servo loop, the error signal (x) existing during the opened state being of periodic or S-shaped curve characteristic;

peak detecting means (8,9) for detecting at least one positive and negative peak value $P_P$, $P_N$ of the error signal with the servo loop held open;

means (12,13) for calculating an offset value $x_{OF}$ by inserting the peak values $P_P$ and $P_N$ in the following expression:

$$x_{OF} = (P_P + P_N)/2$$

and holding the offset value; and

means (4) for subtracting the offset value from a signal level of the error signal (x) in the closed state (a) of the servo loop, characterised in that

the peak detecting means samples at a predetermined frequency a plurality of values (x) of the error signal with the servo loop held open; and by

means (S5) for determining for each sample whether or not a predetermined period substantially longer than the sampling period has lapsed after the servo loop is opened and, if it has not lapsed, setting peak value compensating constant (LE) to a first value greater than a second value to which it is set if the predetermined value has lapsed;

means (S8) for determining for each sample whether the error signal (x) is positive or negative;

means (S9-S11) for determining, if the error signal (x) is positive, whether or not the error signal (x) is larger than the previously detected peak positive value, and, if it is larger, setting the peak positive value ($x_{PP}$) to be equal to the error signal (x), and, if it is smaller, setting the peak positive value ($x_{PP}$) to the previously detected peak positive value less the compensation constant ($x_{PP}$-LE);

means (S13-S15) for determining, if the error signal (x) is negative, whether or not the error signal (x) is smaller than the previously detected peak negative value, and, if it is smaller, setting the peak negative value ($x_{PN}$) to be equal to the error signal (x), and, if it is larger, setting the peak negative value ($x_{PN}$) to the previously detected peak negative value plus the compensation constant ($x_{PN}$ + LE);

and by means (S12,S16) for averaging the pluralities of positive and negative peak values thus generated to provide averaged positive and negative peak values $P_P$ and $P_N$.

2. A circuit according to claim 1, wherein the peak detecting means and the calculating means comprise a microprocessor (15) and a memory (16) is provided to hold the peak values $P_P, P_N$ and the offset value $x_{OF}$.

**Patentansprüche**

1. Nullpunktabweichungsausgleichschaltung für eine Servo-Spurführungsvorrichtung und eine Servo-Fokussiervorrichtung eines optischen Plattenspielers, die umfaßt:

Mittel (2) zum Öffnen des Servoregelkreises, wobei das während des geöffneten Zustandes vorhandene Fehlersignal (x) eine periodische oder S-förmige Kennlinie hat;

Spitzenwertdetektormittel (8, 9) zur Ermittlung wenigstens eines positiven und negativen Spitzenwertes $P_P$, $P_N$ des Fehlersignals bei geöffnetem Servoregelkreis;

Mittel (12, 13) zur Errechnung eines Nullpunktabweichungswertes $X_{OFF}$ des Fehlersignals, indem die Spitzenwerte $P_P$ und $P_N$ in den folgenden Ausdruck eingesetzt werden:

$$X_{OFF} = (P_P + P_N)/2$$

und zur Speicherung des Nullpunktabweichungswertes; und

Mittel (4) zur Subtraktion des Nullpunktabweichungswertes vom Signalpegel des Fehlersignals (x) im geschlossenen Zustand (a) des Servoregelkreises, dadurch gekennzeichnet, daß

das Spitzenwertdetektormittel mit vorgegebener Frequenz eine Vielzahl von Werten (x) des Fehlersignals bei geöffnetem Servoregelkreis abfragt; und durch

Mittel (S5), das bei jedem Abfragewert ermittelt, ob oder ob nicht eine vorgegebene Zeit, die im wesentlichen länger ist als die Abfrageperiode, vergangen ist, seit der Servoregelkreis geöffnet ist, und, wenn diese Zeit nicht vergangen ist, die Spitzenwertausgleichkonstante (LE) auf einen ersten Wert einstellt, der größer als der zweite Wert ist, auf den sie eingestellt wird, wenn der vorgegebene Zeitwert vergangen ist;

Mittel (S8), das bei jedem Abfragewert ermittelt, ob das Fehlersignal (x) positiv oder negativ ist;

Mittel (S9-11), das ermittelt, ob das Fehlersignal (x) positiv ist, ob oder ob nicht das Fehlersignal (x) größer ist als ein vorher ermittelter positiver Spitzenwert, und, wenn es größer ist, den positiven Spitzenwert ($x_{PP}$) so einstellt, daß er gleich dem Fehlersignal (x) ist, und, wenn er kleiner ist, den positiven Spitzenwert ($x_{PP}$) auf den vorher ermittelten positiven Spitzenwert minus Ausgleichkonstante ($x_{PP}$ - LE) einstellt;

Mittel (S13-S15), das ermittelt, ob das Fehlersignal (x) negativ ist, ob oder ob nicht das Fehlersignal (x) kleiner als ein vorher ermittelter negativer Spitzenwert ist, und, wenn er kleiner ist, den negativen Spitzenwert ($x_{PN}$) so einstellt, daß er gleich dem Fehlersignal (x) ist, und, wenn er größer ist, den negativen Spitzenwert ($x_{PN}$) auf den vorher ermittelten negativen Spitzenwert plus Ausgleichkonstante ($x_{PN}$ + LE) einstellt; und durch Mittel (S12, S16), die den Mittelwert der Vielzahl der so erzeugten positiven und negativen Spitzenwerte bilden und so gemittelte positive und negative Spitzenwerte $P_P$ und $P_N$ bilden.

2. Schaltung nach Anspruch 1, wobei das Spitzenwertdetektormittel und das Rechenmittel einen Mikroprozessor (15) und einen Speicher (16) zum Speichern der Spitzenwerte $P_P$, $P_N$ und des Nullpunktabweichungswertes $x_{OFF}$ umfassen.

## Revendications

1. Circuit de compensation de l'écart pour un dispositif d'asservissement de suivi ou pour un dispositif d'asservissement de foyer dans un lecteur de disques optiques comprenant :

des moyens (2) pour ouvrir la boucle d'asservissement, le signal d'erreur (x) existant pendant l'état ouvert, et étant sous une caractéristique périodique ou en forme de courbe en S ;

des moyens détecteurs de crête (8, 9) pour détecter au moins une valeur de crête positive et une valeur de crête négative $P_p$, $P_n$ du signal d'erreur, la boucle d'asservissement étant maintenue ouverte ;

des moyens (12, 13) pour calculer une valeur de l'écart $x_{OF}$ en insérant les valeurs de crête $P_p$, et $P_n$ dans l'expression suivante :

$$x_{OF} = (P_P + P_N)/2$$

et en maintenant la valeur de l'écart ; et, des moyens (4) pour soustraire la valeur de l'écart du niveau de signal du signal d'erreur (x) dans l'état fermé de la bouche d'asservissement, caractérisé en ce que,

les moyens détecteurs de crête échantillonnent sous une fréquence prédéterminée une pluralité de valeurs (x) du signal d'erreur, la boucle d'asservissement étant maintenue ouverte et par :

des moyens (S5) pour déterminer, pour chaque échantillon, si oui ou non une période prédéterminée, relativement plus grande que la période d'échantillonnage, s'est écoulée depuis l'ouverture de la boucle d'asservissement et, si cette période ne s'est pas écoulée, pour rendre une constante LE de compensation de valeur de crête (LE) égale à une première valeur plus grande qu'une seconde valeur sous laquelle on l'a réglée si la valeur prédéterminée s'est écoulée ;

des moyens (S8) pour déterminer pour chaque échantillon si le signal d'erreur (x) est positif ou négatif ;

des moyens (S9 - S11) pour déterminer, dans le cas où le signal d'erreur (x) est positif, si oui ou non le signal d'erreur (x) est plus grand que la valeur positive de crête détectée précédemment, et, dans le cas où il est plus grand pour rendre la valeur ($x_{pp}$) positive de crête égale au signal d'erreur (x), et s'il est plus petit, pour rendre la valeur positive de crête ($x_{pp}$) égale à la valeur positive de crête précédemment détectée moins la constante de compensation ($x_{pp}$ - LE) ;

des moyens (S13 - S15) pour déterminer, dans le cas où le signal d'erreur (x) est négatif, si oui ou non le signal d'erreur (x) est plus petit que la valeur négative de crête précédemment détectée et, si il est plus petit, pour rendre la valeur négative de crête ($x_{PN}$) égale à une valeur égale au signal d'erreur (x), et s'il est plus grand, pour rendre la valeur négative de crête ($x_{PN}$) égale à une valeur négative de crête précédemment détectée plus la constante de compensation ($x_{PN}$ + LE) ;

et par des moyens (S12, S16) pour calculer la moyenne de la pluralité des valeurs de crête positives et négatives ainsi générées pour produire des valeurs $P_P$ et $P_N$ de crêtes positive et négative, moyennées.

2. Circuit selon la revendication 1, dans lequel les moyens de détection de crête et les moyens de calcul comportent un microprocesseur (15) et une mémoire (16) disposés de façon à maintenir les valeurs crête $P_P$ et $P_N$ et les valeurs de l'écart $x_{OF}$.

FIG. 1

FIG. 2

FIG. 3

# FIG. 4

START

S1
$x_{PP}=0$
$x_{PN}=0$  $C=0$

S2
$y=0$
OPEN SERVO LOOP

S3
RECEIVE x

S4
$C = C + 1$

S5
$C \geqq 1500$ ?
YES → S7  LE = 1
NO → S6  LE = 3

A

S8
$x > 0$ ?
YES
NO

S13
$x \leqq x_{PN}$ ?
YES → S14  $x_{PN} \leftarrow x$
NO → S15  $x_{PN} \leftarrow x_{PN} + LE$

S9
$x > x_{PP}$ ?
YES → S10  $x_{PP} \leftarrow x$
NO → S11  $x_{PP} \leftarrow x_{PP} - LE$

S16
CALCULATE $P_N$ VALUE

S12
CALCULATE $P_P$ VALUE

S17
$\frac{1}{2}(P_P + P_N) = x_{OF}$

RETURN

EP 0 260 987 B1

8